# EUROPÄISCHE PATENTSCHRIFT

(11) **EP 2 159 110 B1**
(45) Veröffentlichungstag und Bekanntmachung des Hinweises auf die Patenterteilung: **16.11.2011**
(21) Anmeldenummer: 09010926.5
(22) Anmeldetag: 26.08.2009
(51) Int. Cl.: B60R 15/00

(54) **Einachsiger Wohnwagen und Verfahren zur Einstellung einer ausgeübten Auflagelast**
Single axle caravan and method for setting an applied load pressure
Caravane uni-axiale et procédé de réglage d'une charge de recouvrement

(30) Priorität: 28.08.2008 DE 102008044660
(43) Veröffentlichungstag der Anmeldung: 03.03.2010
(73) Patentinhaber: REIMO Reisemobil-Center GmbH, 63329 Egelsbach (DE)
(72) Erfinder: Holona, Günter, 63329 Egelsbach (DE)
(74) Vertreter: Katscher Habermann Patentanwälte

(56) Entgegenhaltungen:
- WO-A1-2005/120901
- DE-A1- 3 410 557
- DE-A1- 4 311 037
- DE-U- 7 512 994
- DE-U- 7 740 235
- DE-U1-202007 009 092
- US-A- 4 039 001
- US-A- 5 897 138
- US-A1- 2004 119 274

## Beschreibung

Die Erfindung betrifft einen einachsigen Wohnwagen mit einer starren Deichsel, mit einem im Bereich der Deichsel oder an einem entgegengesetzten Ende des Wohnwagens angeordneten Stauraum und mit einem Wassertank.

Als Wohnwagen werden Anhänger für Kraftfahrzeuge bezeichnet, in denen sich eine Wohnungseinrichtung befindet, so dass üblicherweise mehrere Personen in dem Wohnwagen übernachten und darin wohnen können. Üblicherweise sind die meisten Wohnwagen, die mit einem PKW oder Geländewagen gezogen werden können, einachsig aufgebaut und mit einer starren Deichsel versehen. Statt einer einzelnen, fest an dem Rahmen des Wohnwagens gelagerten Achse können auch zwei unmittelbar hintereinander angeordnete, festgelagerte Achsen vorgesehen sein, die zumindest bei größeren Wohnwagen hinsichtlich der Fahreigenschaften und der Kippsicherheit wie eine einzige Achse wirken und nachfolgend vereinfachend ebenfalls als Einachser bezeichnet werden. Derartige Wohnwagen weisen eine starre Deichsel auf, die mit einem ziehenden Kraftfahrzeug verbunden werden kann.

In dem Wohnwagen befinden sich üblicherweise mehrere Schlafplätze, die je nach Ausstattung und Anordnung tagsüber auch zu Sitzgruppen umgebaut werden können. Regelmäßig befinden sich auch eine Kochgelegenheit sowie eine Waschgelegenheit in dem Wohnwagen, der zu diesem Zweck eine Wasserversorgung sowie eine Stromversorgung, beziehungsweise eine Gasversorgung aufweisen muss. Weiterhin weist ein Wohnwagen einen Wassertank zur Aufnahme von Frischwasser und einen weiteren Wassertank zur Aufnahme von Abwasser auf.

Es ist aus der Praxis bekannt, dass entweder im Bereich der Deichsel oder an einem entgegengesetzten Ende des Wohnwagens ein größerer Stauraum angeordnet oder zumindest vorgesehen ist, der zur Aufnahme von sperrigen oder nicht im Innenraum des Wohnwagens benötigten Gegenständen verwendet werden kann. Der Stauraum kann dabei von dem Inneren des Wohnwagens aus oder, wie in den meisten Fällen von außen aus zugänglich sein. Um einen angemessenen Schutz vor beispielsweise Regen oder Schmutz bieten zu können ist der Stauraum oft in Form eines verschließbaren Kastens ausgestaltet. Regelmäßig ist der Stauraum dabei ein innerhalb des Wohnwagens angeordneter, allseitig geschlossener Raum, der von außen und üblicherweise von einer Seite oder von zwei Seiten zugänglich ist. In einigen Fällen wie beispielsweise einer Haltevorrichtung für Fahrräder am Ende des Wohnwagens kann der Stauraum auch ausschließlich durch eine geeignete Standfläche oder Haltevorrichtung gebildet werden.

Eine Nutzung des oftmals voluminösen Stauraums sowie von in dem Wohnwagen angeordneten Ablageflächen und Fächern wird jedoch dadurch erschwert oder sogar teilweise unmöglich gemacht, dass die über die Deichsel auf das ziehende Kraftfahrzeug ausgeübte Auflagelast des Wohnwagens innerhalb enger Grenzen vorgegeben ist und während einer Fahrt mit dem Wohnwagen eingehalten werden muss.

Um die Fahreigenschaften nicht unangemessen zu beeinträchtigen, sollte die von der Deichsel auf das ziehende Kraftfahrzeug ausgeübte Auflagelast üblicherweise etwa zwischen 50 kg bis 125 kg betragen, wobei die Auflagelast auf das ziehende Kraftfahrzeug sowie den Wohnwagen abgestimmt sein sollte. Eine zu große Auflagelast würde die Hinterradachse des ziehenden Kraftfahrzeugs übermäßig belasten, während eine zu geringe Auflagelast dazu führen könnte, dass insbesondere bei Bodenunebenheiten der Wohnwagen größere Schwenkbewegungen um die eigene Radachse ausführen könnte und dabei die Hinterradachse des ziehenden Fahrzeugs zeitweise zu stark belasten oder entlasten, beziehungsweise sogar anheben könnte. Vor jeder Fahrt muss deshalb die in Abhängigkeit von der Einrichtung und Beladung des Wohnwagens über die Deichsel ausgeübte Auflagelast gemessen und auf einen innerhalb des zulässigen Bereichs liegenden Wert eingestellt werden.

Die Möblierung und Standardeinrichtung eines jeden Wohnwagens ist üblicherweise darauf ausgerichtet, dass die über die Deichsel ausgeübte Auflagelast innerhalb des zulässigen Bereichs liegt. Wenn jedoch zusätzlich beispielsweise Gepäckstücke, Gartenmöbel, Fahrräder oder ein Grill mitgenommen und zu diesem Zweck in dem Stauraum deponiert werden sollen, so muss darauf geachtet werden, dass die Auflagelast auch bei der zusätzlichen Beladung innerhalb des zulässigen Bereichs bleibt.

Der im Bereich der Deichsel oder an dem entgegengesetzten Ende des Wohnwagens angeordnete Stauraum ist oftmals ausreichend groß, um ein zusätzliches Staugewicht in Höhe von 150 kg oder sogar 200 kg mitführen zu können. Dies führt jedoch regelmäßig dazu, dass abhängig von der Anordnung und Beladung des Stauraums die sich ergebende Auflagelast unzulässig große oder zu geringe Werte erreicht.

Aus der Praxis ist es bekannt, dass beispielsweise einzelne Teile des Reisegepäcks während der Fahrt in dem der Deichsel gegenüberliegenden Ende im Inneren des Wohnwagens gestapelt werden, um auf diese Weise ein Gegengewicht zu den oftmals schweren Gegenständen zu bilden, die in dem Stauraum mitgeführt werden. Dies erfordert jedoch ein sorgfältiges Ausbalancieren vor Antritt der Reise sowie ein ständiges und umständliches Be- und Entladen des Reisegepäcks bei jedem längeren Halt.

Es sind auch Wohnwagen bekannt, die anstelle einer fest an dem Rahmen des Wohnwagens gelagerten Achse eine verstellbare Achse aufweisen, die je nach Beladung des Stauraums etwas weiter nach vorne, beziehungsweise etwas weiter nach hinten verlagert werden kann. Die Anforderungen an einen derartigen Verstellmechanismus sind auf Grund des oftmals hohen Eigengewichts des Wohnwagens und der während der Fahrt auftretenden Belastungen jedoch sehr hoch, so dass die zusätzlich mitführbare Nutzlast in dem Stauraum nahe der Deichsel im keinem Verhältnis zu den zusätzlich anfallenden Kosten steht.

Au der DE 20 2007 009091 U1 ist ein einachsiger Wohnwagen mit einer starren Deichsel und mit einem im Bereich der Deichsel oder an einem entgegengesetzten Ende des Wohnwagens angeordneten Stauraum und einem Wassertank bekannt, bei dem der Wassertank an einem dem Stauraum entgegengesetzten Ende des Wohnwagens angeordnet ist.

Aufgabe der vorliegenden Erfindung ist es demzufolge, einen Wohnwagen der eingangs genannten Gattung so auszugestalten, dass der im Bereich der Deichsel oder an einem entgegengesetzten Ende des Wohnwagens angeordnete Stauraum mit einer möglichst großen Nutzlast beladen werden kann und gleichzeitig die über die Deichsel ausgeübte Auflagelast mit einfachen Mitteln und mit möglichst geringem Aufwand innerhalb des zulässigen Bereichs möglichst optimal eingestellt werden kann.

Diese Aufgabe wird erfindungsgemäß dadurch gelöst, dass der an einem dem Stauraum entgegengesetzten Ende des Wohnwagens angeordnete Wassertank ein automatisiert betreibbares Auslassventil aufweist. Derartige Einfüllöffnungen und automatisierbare Auslassöffnungen können natürlich auch bei einem Wassertank vorgesehen sein, der nicht gleichzeitig als Abwassertank oder als Frischwassertank verwendet wird. Der Wassertank kann unmittelbar vor Beginn einer Fahrt und nach dem vollständigen Beladen des Wohnwagens in geeigneter Weise so befüllt oder, sofern sich noch eine größere Wasser darin befindet, entleert werden, dass durch die anschließend in dem Wassertank befindliche Wassermenge die Gewichtsverteilung innerhalb des Wohnwagens einschließlich des Stauraums ausbalanciert und die über die Deichsel ausgeübte Auflagelast auf einen vorgebbaren Wert eingestellt werden kann. Wasser ist an den für Wohnwagen vorgesehenen Halteplätzen üblicherweise problemlos verfügbar und kann deshalb ohne größeren Aufwand vor jedem Beginn einer Fahrt bei Bedarf in den Wassertank eingefüllt werden. Die in Rede stehenden Wassermengen können nahezu überall aus dem Wassertank abgelassen werden, ohne dass eine aufwändige Entsorgung des abgelassenen Wassers erforderlich wird.

Um auch bei großen Stauräumen und gegebenenfalls stark wechselnder Beladung den Wohnwagen ausbalancieren zu können ist vorgesehen, dass der Wassertank ein Volumen von mindestens mehr als 50 1, vorzugsweise von mehr als 80 1 und insbesondere von mehr als 100 1 aufweist. Das Fassungsvermögen des Wassertanks kann dabei auf die Größe des Stauraums und das zulässige Gesamtgewicht des Wohnwagens abgestimmt sein.

Zweckmäßigerweise ist der Wassertank mit einem möglichst großen Abstand zu der Achse des Wohnwagens angeordnet, so dass eine möglichst geringe zusätzlich mitgeführte Wassermenge ausreicht, um die gewünschte Auflagelast einstellen zu können.

Gemäß einer besonders vorteilhaften Ausgestaltung des Erfindungsgedankens ist vorgesehen, dass der Wassertank ein an Wasser verbrauchende Einrichtungen angeschlossener Frischwassertank oder Abwassertank ist. Die in Wohnwagen üblicherweise verwendeten Abwassertanks weisen regelmäßig ein geringes Volumen auf und sind im Bereich der Achse angeordnet, um die sich ergebende Auflagelast möglichst nicht oder lediglich geringfügig zu beeinflussen. Ein Frischwassertank wird dagegen oftmals in der Nähe der wasserverbrauchenden Einrichtungen, beispielsweise unterhalb eines Spülbeckens, angeordnet. Indem der für die Wasser verbrauchenden Einrichtungen erforderliche Wassertank ausreichend groß dimensioniert und an einer geeigneten Stelle in möglichst großer Entfernung zu der Achse des Wohnwagens angeordnet wird, kann der Frischwassertank oder der Abwassertank zum Ausbalancieren des Wohnwagens verwendet werden. Zusätzliche konstruktive Einrichtungen sind nicht erforderlich. Natürlich können auch sowohl der Frischwasser- als auch der Abwassertank zum Ausbalancieren des Wohnwagens verwendet und zu diesem Zweck geeignet ausgestaltet werden. Bei der Verwendung des Frischwassertanks kann die zum Ausbalancieren des Wohnwagens erforderliche Wassermenge anschließend zum Betrieb der Wasser verbrauchenden Einrichtungen verwendet werden und muss nicht nach Beendigung der Fahrt ungenutzt abgelassen werden.

Der Abwassertank weist zweckmäßigerweise eine separate, beziehungsweise von außen zugängliche Einfüllöffnung auf, um ein gegebenenfalls erforderliches Befüllen des Abwassertanks unmittelbar vor Fahrtantritt zu erleichtern. Bei einem Frischwassertank ist dies üblicherweise bereits vorgesehen.

Es erleichtert die Einstellung der vorgegebenen Auflagelast und kann zur Erhöhung der Betriebssicherheit dienen, wenn der Wohnwagen eine Messeinrichtung zur Erfassung der Auflagelast aufweist. Diese Messeinrichtung kann beispielsweise eine aus der Praxis bereits bekannte Kraftmesseinrichtung oder federbelastete Waage sein, die in die Lagerung eines Stützrads an der Deichsel integriert sein kann. Diese Messeinrichtung kann mit einer Anzeigeeinrichtung verbunden sein oder aber mittels einer geeigneten Steuereinrichtung ein teilweise oder vollständig automatisiertes Befüllen und insbesondere Entleeren des Wassertanks ermöglichen. Insbesondere in Verbindung mit einer Messeinrichtung zur automatisierbaren Erfassung der sich jeweils einstellenden Auflagelast kann mittels automatisierbarer Ventile Wasser aus dem Frischwasser- und Abwassertank ausgelassen werden, um die gewünschte Auflagelast einzustellen.

Die Erfindung betrifft auch ein Verfahren zur Einstellung einer auf eine Deichsel eines einachsigen Wohnwagens ausgeübten Auflagelast. Erfindungsgemäß wird dabei vor Beginn einer Fahrt in einen Wassertank eine die vorgegebene Auflagelast herbeiführende Wassermenge eingefüllt. Dies beinhaltet auch, dass gegebenenfalls eine bereits in dem Wassertank befindliche zu große Wassermenge teilweise abgelassen und auf die für das Ausbalancieren des Wohnwagens erforderliche Wassermenge reduziert, beziehungsweise eingestellt wird.

Der Wassertank weist zu diesem Zweck eine von außen zugängliche Einfüllöffnung auf, so dass eine zusätzlich erforderliche Wassermenge von außerhalb des Wohnwagens in den Wassertank eingefüllt werden kann.

Mittels einer geeigneten Messeinrichtung kann die sich einstellende Auflagelast ermittelt und für den weiteren Befüllungsvorgang berücksichtigt werden. Es ist auch denkbar, dass in Abhängigkeit von der mittels der Messeinrichtung ermittelten Auflagelast eine gesteuerte oder geregelte Befüllung des Wassertanks zum automatisierten Ausbalancieren des Wohnwagens erfolgen kann.

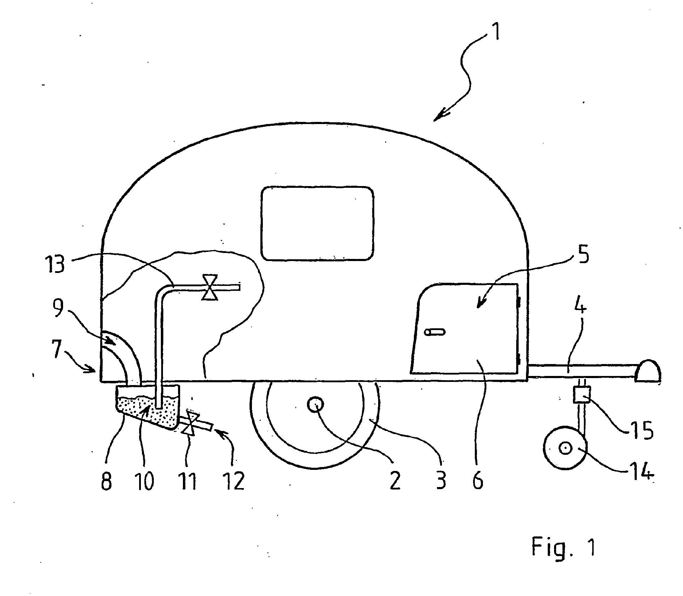

Nachfolgend wird ein Ausführungsbeispiel der Erfindung näher erläutert, das in der Zeichnung dargestellt ist.

Ein in der Figur schematisch dargestellter einachsiger Wohnwagen 1 weist eine etwa mittig angeordnete, fest an einer Unterseite des Wohnwagens 1 gelagerte Radachse 2 mit zwei Rädern 3 auf. Der Wohnwagen 1 ist über eine starre Deichsel 4 mit einem nicht dargestellten ziehenden Kraftfahrzeug verbindbar. Im Bereich nahe bei der starren Deichsel 4 ist ein Stauraum 5 ausgebildet, der sich im Inneren des Wohnwagens 1 befindet und durch Türen oder Klappen 6 von außen zugänglich ist. Der Stauraum 5 könnte bei einer anderen Ausführung auch an einem entgegengesetzten Ende 7 des Wohnwagens 1 angeordnet sein. Es ist auch denkbar, dass der Stauraum 5 teilweise oder vollständig als kastenförmigen Aufbau ausgestaltet ist, der beispielsweise im Bereich der Deichsel 4 angeordnet und von außen und/oder Innen zugänglich sein kann.

Bei dem in der Figur dargestellten Ausführungsbeispiel ist ein Wassertank 8 an dem der starren Deichsel 4 entgegengesetzten Ende 7 des Wohnwagens 1 möglichst tief und außerhalb des nutzbaren Innenraums angeordnet. Der Wassertank 8 weist eine von außen zugängliche Einfüllöffnung 9 auf. Eine in dem Wassertank 8 befindliche Wassermenge 10 kann über eine mit einem Ventil 11 verschließbare Auslassöffnung 12 aus dem Wassertank 8 ausgelassen werden. Der Wassertank 8 ist über eine Verbindungsleitung 13 mit nicht dargestellten Wasser verbrauchenden Einrichtungen wie beispielsweise sanitären Anlagen oder einer Spüle verbunden.

An der starren Deichsel 4 ist ein Stützrad 14 angeordnet. Zwischen der starren Deichsel 4 und dem Stützrad 14 ist eine Messeinrichtung 15 mit einer federbelasteten Waage und einer Anzeigeeinrichtung angeordnet.

Wird während einer obligatorischen Kontrolle der mittels der Messeinrichtung 15 angezeigten Auflagelast der starren Deichsel 4 festgestellt, dass sich die auflagelast auf Grund der aktuellen Beladung des Wohnwagens 1 außerhalb des zulässigen Bereichs befindet, so kann durch ein Befüllen oder Entleeren des Wassertanks 8 der beladene Wohnwagen 1 ausbalanciert und die gewünschte Auflagelast eingestellt werden.

## Patentansprüche

1. Einachsiger Wohnwagen mit einer starren Deichsel, mit einem im Bereich der Deichsel oder an einem entgegengesetzten Ende des Wohnwagens angeordneten Stauraum und mit einem Wassertank, wobei der Wassertank (8) an einem dem Stauraum (5) entgegengesetzten Ende (7) des Wohnwagens (1) angeordnet ist, **dadurch gekennzeichnet, dass** der Wassertank (8) ein automatisiert betreibbares Auslassventil (11) aufweist.

2. Einachsiger Wohnwagen nach Anspruch 1, **dadurch gekennzeichnet, dass** der Wassertank (8) ein Volumen von mindestens mehr als 50 l, vorzugsweise von mehr als 80 l und insbesondere von mehr als 100 l aufweist.

3. Einachsiger Wohnwagen nach Anspruch 1 oder Anspruch 2, **dadurch gekennzeichnet, dass** der Wassertank (8) ein an Wasser verbrauchende Einrichtungen angeschlossener Frischwassertank oder Abwassertank ist.

4. Einachsiger Wohnwagen nach einem der vorangehenden Ansprüche, **dadurch gekennzeichnet, dass** der Wassertank eine von außen zugängliche Einfüllöffnung (9) aufweist.

5. Einachsiger Wohnwagen nach einem der vorangehenden Ansprüche, **dadurch gekennzeichnet, dass** der Wohnwagen (1) eine Messeinrichtung (15) zur Erfassung der Auflagelast aufweist.

6. Verfahren zur Einstellung einer auf eine Deichsel eines einachsigen Wohnwagens ausgeübten Auflagelast, **dadurch gekennzeichnet, dass** vor Beginn einer Fahrt in einen Wassertank (8) eine die vorgegebene Auflagelast herbeiführende Wassermenge (10) eingefüllt wird.

## Claims

1. Single-axle caravan having a rigid drawbar, having a storage compartment arranged in the region of the drawbar or at the opposite end of the caravan, wherein the water tank (8) is arranged at that end (7) of the caravan (1) which is opposite from the storage compartment (5), **characterized in that** the water tank (8) has an outlet valve (11) that can be operated in an automated manner.

2. Single-axle caravan according to Claim 1, **characterized in that** the water tank (8) has a volume of at least more than 50 1, preferably of more than 80 1 and in particular of more than 100 1.

3. Single-axle caravan according to Claim 1 or Claim 2, **characterized in that** the water tank (8) is a fresh water tank or a waste water tank which is connected to devices that consume water.

4. Single-axle caravan according to one of the preceding claims, **characterized in that** the water tank has a filling opening (9) that is accessible from the outside.

5. Single-axle caravan according to one of the preceding claims, **characterized in that** the caravan (1) has a measuring device (15) for sensing the bearing load.

6. Method for setting a bearing load that is exerted on a drawbar of a single-axle caravan, **characterized in that**, before the start of a journey, a quantity of water (10) that leads to the specified bearing load is filled into a water tank (8).

## Revendications

1. Caravane uniaxiale équipée d'une barre d'attelage rigide, d'un espace de rangement disposé dans la zone de la barre d'attelage ou au niveau d'une extrémité opposée de la caravane et d'un réservoir d'eau, le réservoir d'eau (8) étant disposé au niveau d'une extrémité (7) de la caravane (1) opposée à l'espace de rangement (5), **caractérisée en ce que** le réservoir d'eau (8) comporte une soupape d'échappement (11) pouvant être actionnée de façon automatisée.

2. Caravane uniaxiale selon la revendication 1, **caractérisée en ce que** le réservoir d'eau (8) présente un volume d'au moins plus de 50 1, de préférence de plus de 80 1 et notamment de plus de 100 1.

3. Caravane uniaxiale selon la revendication 1 ou 2, **caractérisée en ce que** le réservoir d'eau (8) est un réservoir d'eau propre ou un réservoir d'eaux usées raccordé à des installations consommant de l'eau.

4. Caravane uniaxiale selon l'une quelconque des revendications précédentes, **caractérisée en ce que** le réservoir d'eau comporte une ouverture de remplissage (9) accessible depuis l'extérieur.

5. Caravane uniaxiale selon l'une quelconque des revendications précédentes, **caractérisée en ce que** la caravane (1) comporte un dispositif de mesure (15) permettant de relever la charge de stockage.

6. Procédé de réglage d'une charge de stockage exercée sur une barre d'attelage d'une caravane uniaxiale, **caractérisé en ce qu'**au début d'un trajet, une quantité d'eau (10) est rajoutée dans un réservoir d'eau (8) en vue d'atteindre la charge de stockage prédéfinie.
